# NEW EUROPEAN PATENT SPECIFICATION

(11) **EP 0 994 649 B2**
(45) Date of publication and mention of the opposition decision: **25.10.2006**
(45) Mention of the grant of the patent: 01.10.2003
(21) Application number: 99921286.3
(22) Date of filing: 06.05.1999
(51) Int. Cl.: A01J 5/08, A01J 5/017

(54) **A TEAT CUP AND A MILKING ROBOT COMPRISING SAME**
ZITZENBECHER UND MELKROBOT MIT EINER SOLCHEN VORRICHTUNG
GOBELETS TRAYEURS ET ROBOT DE TRAITE EQUIPE DE CES GOBELETS

(30) Priority: 06.05.1998 NL 1009075
(43) Date of publication of application: 26.04.2000
(73) Proprietor: MAASLAND N.V., 3155 PD Maasland (NL)
(72) Inventor: VAN DEN BERG, Karel, NL-2971 BR Bleskensgraaf (NL)
(74) Representative: Corten, Maurice Jean F.M.
(86) International application number: PCT/NL1999/000279
(87) International publication number: WO 1999/056528

(56) References cited:
- EP-A- 0 647 390
- EP-A- 0 774 204
- GB-A- 161 435
- US-A- 1 971 467
- US-A- 3 726 252
- US-A- 4 745 881
- International standard ISO 3918:1996

## Description

The invention relates to a teat cup as described in the preamble of claim 1. The invention further relates to a milking robot comprising such a teat cup.

The known teat cups are substantially cylindrical and have an opening at their upper, see US-A-4 745 881. In general they can be positioned vertically, e.g. on the robot arm of a milking robot. This has inter alia the disadvantage that before and after milking dirt and contaminations may penetrate Into the teat cup from above, so that the necessary hygiene cannot be guaranteed. Besides, such teat cups take up much space.

The invention aims at obviating the above-mentioned drawbacks and at providing an improved teat cup. According to the invention this is achieved by the measures mentioned in the characterizing part of claim 1. The teat cup being designed as a flexible and/or deformable one, it can be stored compactly before and after milking. Further the end of the teat cup can be bent from the vertical working position, so that the risk of dirt and contaminations penetrating into the teat cup is reduced.

In accordance with an inventive feature, the teat cup is designed in such a manner that one end of the teat cup can be bent in the direction of the other end. According to again another inventive feature, the bending means comprise a pulling element, such as a cord, that is fastened to the lateral side of the teat cup at the upper part thereof and extends downwardly along the teat cup. According to still another inventive feature, the pulling element extends partially through a guide element.

According to a further inventive feature, one end of the teat cup can be bent in the direction of the other end to that degree that a central axis of one end encloses an angle of not more than 90° with a central axis of the other end. This has the advantage that the height of the teat cup can be reduced.

In accordance with another inventive feature, the teat cup is provided with means for bending the teat cup back into its substantially straight shape. According to still another inventive feature, the teat cup is designed In such a manner that it is inclined to assume its substantially straight shape in the unloaded condition, so that bending back means are superfluous.

According to again another inventive feature, the flexible and/or deformable portion of the teat cup comprises a spring. Accordingly a cheap embodiment is realized in a simple manner. Moreover, the spring may facilitate the pulsating movement carried out by the liner of the teat cup during milking, so that the liner will wear less quickly. According to a further inventive feature, the spring is constituted by a prestressed compression spring. This has the advantage that the prestressed compression spring makes It possible for the liner of the teat cup to remain stressed for a longer period of time and to slacken less quickly, which influences the life of the teat cup in a positive manner.

In accordance with a further inventive feature, the spring is vulcanized. According to again another inventive feature, the spring Is disposed In a prestressed casing.

According to a still further inventive feature, the flexible and/or deformable portion of the teat cup comprises a number of substantially ring-shaped elements that are interconnected in a hinging or flexible manner.

According to again another inventive feature, the teat cup and/or the robot arm are/is provided with means for positioning the teat cup on the robot arm, the positioning means being designed in such a mannerthat with the aid of the bending means the teat cup can be given a fixed, predetermined orientation relative to the robot arm. If necessary, the positioned teat cup can then be rotated into the desired position.

In accordance with the invention the teat cup can be applied In a very advantageous manner in an automatic milking implement or milking robot. With such a milking robot having at least one robot arm provided with at least one teat cup, according to the invention the upper end of the teat cup can be bent into a position in which it is orientated horizontally or downwardly. In this manner dirt Is prevented from penetrating into the teat cup from above. Moreover, the teat cup has a small height in this position.

According to an inventive feature, the teat cup and/or the robot arm are/is provided with means for positioning the teat cup on the robot arm, the positioning means being designed in such a manner that, when beIng positioned, the teat cup is given automatically a fixed, predetermined orientation relative to the robot arm. According to again another inventive feature, the positioning means comprise a protrusion and a recess cooperating therewith. According to a still further inventive feature, the protrusion and the recess have the shape of half an egg (in longitudinal cross-section).

The invention will now be explained in further detail with reference to the accompanying drawings.
Figure 1 is a schematic plan view of an end of a robot arm of a milking robot provided with teat cups according to the invention;
Figure 2 is a schematic side view of the milking robot of Figure 1;
Figure 3 is a schematic side view of a teat cup;
Figure 4 is a further schematic side view of the teat cup of Figure 3;
Figure 5 is a schematic, partial longitudinal cross-section of the teat cup of Figure 4 taken on the line V - V, and
Figure 6 is a schematic side view of another embodiment of the teat cup.

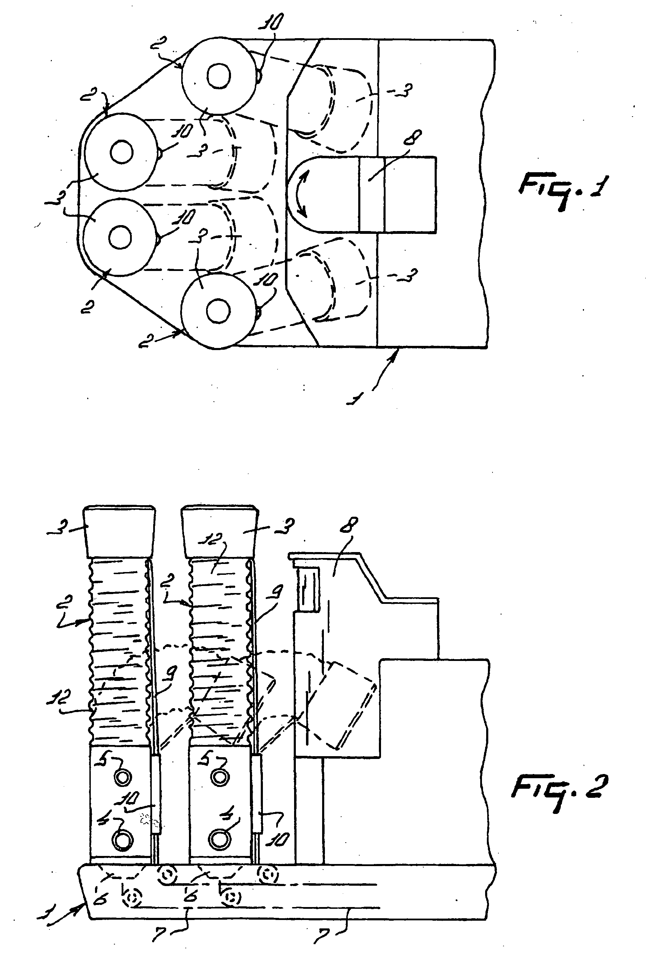

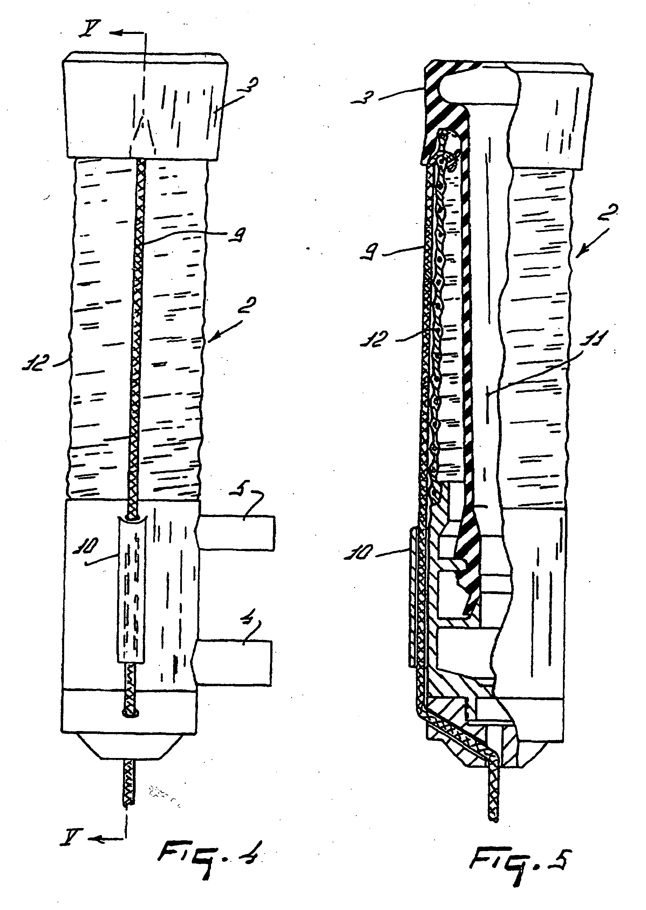

Figures 1 and 2 show a schematic plan view, a schematic side view, respectively, of an end of a robot arm 1 of a milking robot provided with teat cups 2 according to the invention. The robot arm 1 is provided with four teat cups 2 for receiving and conveying the milk yielded, said teat cups 2 being provided internally with a rubber liner known per se, which liner is connected at its upper side with the teat cup 2 via a mouthpiece 3 (see also Figure 5). Each teat cup 2 is connected to a milk line 4 in which there is a permanently prevailing vacuum. Via the vacuum line 4 milk is discharged from the teat cup 2 for the purpose of being processed further. To each teat cup 2 there is also connected a pulse tube 5 which is adapted to realize changes in pressure in the space between the outer wall of the teat cup 2 and the liner, which changes in pressure cause the flexible, deformable liner to be alternately squeezed in a release phase and reopened in a subsequent suction phase during milking.

By means of a protrusion 6 fitting in a corresponding recess and cooperating therewith, each teat cup 2 is positioned at its lower side on a milking cluster or, as shown, on the robot arm 1. Of course, the protrusion 6 may also be arranged on the robot arm 1, the corresponding recess being provided at the lower side of the teat cup 2. With the aid of a cord 7 passed through the robot arm 1 the teat cup 2 is connected with the robot arm 1. After milking the teat cup 2 can be pulled back via the cord 7 to the robot arm 1 and be positioned there with the aid of the protrusion 6 and the recess corresponding therewith.

The protrusion 6 and the recess are preferably designed in such a manner that, upon positioning of the teat cup 2, when the cord 7 pulls the protrusion 6 against the recess, the teat cup 2 obtains automatically a fixed, predetermined orientation relative to the robot arm 1. This may be achieved by a plurality of embodiments; for example, the protrusion 6 and the recess may have the shape of half an egg (in longitudinal cross-section). The predetermined orientation is relevant in relation to the means for bending the teat cup 2, which means will be described in the following.

Furthermore the robot arm 1 is provided with means 8 known per se for detecting the teats of an animal to be milked, and with non-shown control means. The detection means comprise e.g. a laser and suitable sensors.

According to the invention, the teat cups 2 are designed such that at least part of their length is flexible and/or deformable. As a result thereof they can be bent downwards from their vertical working position (see Figure 2) as indicated by dashed lines in Figures 1 and 2. As shown, the upper end of the teat cup 2 is bent in the direction of the lower end.

The teat cup 2 is preferably provided with means 9 for bending one end of the teat cup in the direction of the other end. These means may be designed in various manners and comprise in the embodiment shown a cord that is fastened to the lateral side of the teat cup at the upper part thereof and extends downwardly into the robot arm 1. The cord 9 extends partially through a guide element 10. By pulling the cord 9 the teat cup 2 can be bent. In a further, non-shown embodiment the cords 7 and 9 can be combined so as to form one single cord by means of which both the positioning of the teat cup 2 on the robot arm 1 and the subsequent bending of the positioned teat cup 2 can be carried out.

In accordance with a further embodiment, the teat cup 2 and/or the robot arm 1 are provided with means 6, 7 for positioning the teat cup 2 on the robot arm 1, the positioning means 6, 7 being designed in such a manner that, after the teat cup 2 has been positioned, said teat cup 2 can be given a fixed, predetermined orientation relative to the robot arm 1 with the aid of the bending means 9. For example, the protrusion 6 and the corresponding recess may be designed as conical ones. In this situation the positioned teat cup 2 can be rotated, if necessary, into the desired position by means of the cord 9.

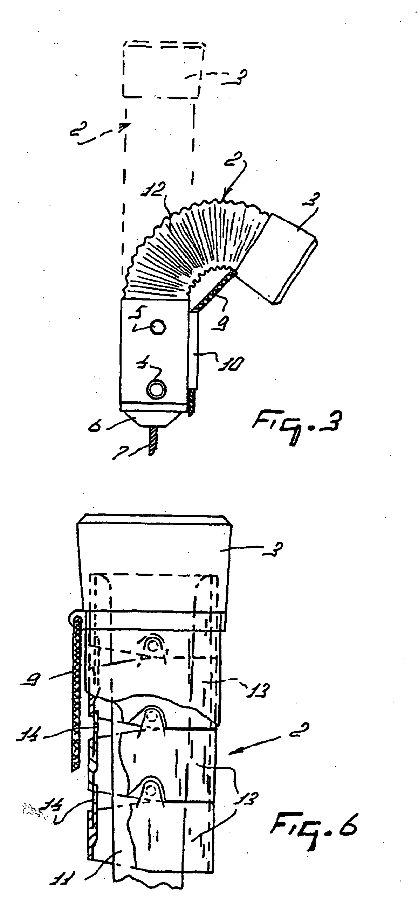

This is shown more clearly yet in Figure 3 which is a schematic side view of the teat cup 2. By means of dashed lines the vertical working position is indicated. One end of the teat cup 2 can be bent in the direction of the other end to that degree that a central axis of one end encloses an angle of not more than 90° with a central axis of the other end. In this situation the lower end of the teat cup 2 is positioned substantially vertically on the robot arm 1 and the upper end is orientated horizontally or downwardly. Figure 4 shows a further schematic side view of the teat cup 2 of Figure 3.

The teat cup 2 may be provided with non-shown means for bending the teat cup 2 back into its substantially straight shape. The teat cup 2 may also be designed in such a manner that it is inclined to reassume its substantially straight shape in the unloaded condition. For example, the flexible portion of the teat cup 2 may rebound as soon as the cord 9 is released.

Figure 5 shows a schematic, partial longitudinal cross-section of the teat cup 2 taken on the line V - V in Figure 4. At the level of the guide element 10, the teat cup 2 with the liner 11 comprises a rigid metal portion and thereabove a flexible and/or deformable portion (extending as far as the mouthpiece 3). In the embodiment shown this is achieved in that the flexible, deformable portion of the teat cup 2 comprises a spring 12 which is vulcanized. This is a cheap but efficient embodiment. During milking the liner 11 of the teat cup 2 carries out a pulsating movement. The spring 12 ensures that this movement can be made without hardly any stretching of the liner 11 in longitudinal direction. As a result thereof the liner 11 will wear less quickly.

The spring 12 is preferably constituted by a prestressed compression spring to be disposed in a prestressed casing. This makes it possible for the liner 11 to remain stressed for a longer period of time and to slacken less quickly, which influences the life of the teat cup 2 in a positive manner.

Figure 6 is a schematic side view of another embodiment of the teat cup. The flexible and/or deformable portion of the teat cup 2 comprises a number of substantially ring-shaped elements 13 that are interconnected in a hinging or flexible manner. In the embodiment shown the ring-shaped elements 13 are interconnected in a hinging manner and designed in such a manner that at the side of the bending means 9 there will be some clearance between the elements 13 when the teat cup 2 is in the vertical working position. This clearance is bridged by resilient intermediate elements 14 which are each time connected with two of the elements 13. When bending the teat cup 2 by means of the bending means 9, the resilient intermediate elements 14 are pressed, so that the ring-shaped elements 13 can turn over.

## Claims

1. A teat cup with an Internally arranged flexible, deformable teat cup liner for milking a teat of an animal to be milked, **characterized in that** the teat cup (2) is designed such that at least part of its length is flexible and/or deformable, so that the teat cup (2) and the teat cup liner together and bendable and that the teat cup (2) is provided with means (9) for bending one end of the teat cup in the direction of the other end.

2. A teat cup as claimed in claim 1, **characterized In that** the teat cup (2) is designed in such a manner that one end of the teat cup can be bent in the direction of the other end.

3. A teat cup as claimed in claim **1 characterized in that** the bending means (9) comprise a pulling element, such as a cord, that is fastened to the lateral side of the teat cup (2) at the upper part thereof and extends downwardly along the teat cup (2).

4. A teat cup as claimed in claim 3, **characterized in that** the pulling element (9) extends partially through a guide element (10).

5. A teat cup as claimed in any one of claims 2-4, **characterized in that** one end of the teat cup (2) can be bent in the direction of the other end to that degree that a central axis of one end encloses an angle of not more than 90° with a central axis of the other end.

6. A teat cup as claimed in any one of claims 2 - 5. **characterized in that** the teat cup (2) is provided with means for bending the teat cup (2) back into its substantially straight shape.

7. A teat cup as claimed in any one of claims 2 - 6, **characterized in that** the teat cup (2) is designed in such a manner that it is inclined to assume its . substantially straight shape In the unloaded condition.

8. A teat cup as claimed In any one of claims 1 - 7. **characterized In that** the flexible and/or deformable portion of the teat cup (2) comprises a spring (12).

9. A teat cup as claimed in claim 8, **characterized in that** the spring (12) is constituted by a prestressed compression spring.

10. A teat cup as claimed in any one of claims 8, and 9, **characterized in that** the spring (12) is vulcanized.

11. A teat cup as claimed In any one of claims 8 - 10.
**characterized in that** the spring (12) is disposed In a prestressed casing.

12. A teat cup as claimed in any one of claims 1 - 7, **characterized In that** the flexible and/or deformable portion of the teat cup (2) comprises a number of substantially ring-shaped elements (13) that are interconnected in a hinging or flexible manner.

13. A milking robot having at least one robot arm provided with at least one teat cup as claimed in any one of claims 1 - 12, **characterized in that** the upper end of the teat cup (2) can be bent into a position in which it is orientated horizontally or downwardly.

14. A milking robot having at least one robot arm provided with at least one teat cup as claimed in any one of claims 1 - 12, **characterized in that** the teat cup (2) and/or the robot arm (1) are/is provided with means (6, 7) for positioning the teat cup (2) on the robot arm (1), the positioning means (6, 7) being designed in such a manner that, when being positioned, the teat cup (2) Is given automatically a fixed, predetermined orientation relative to the robot arm (1).

15. A milking robot as claimed in claim 14 **characterized in that** the positioning means (6, 7) comprise a protrusion (6) and a recess cooperating therewith.

16. A milking robot as claimed in any one of claims 14 and 15, **characterized in that** the protrusion (6) and the recess have the shape of half an egg (in longitudinal cross-section).

17. A milking robot having at least one robot arm provided with at least one teat cup as claimed in claim 1 or in any one of claims 3 - 12, **characterized in that** the teat cup (2) and/or the robot arm (1) are/is provided with means (6, 7) for positioning the teat cup (2) on the robot arm (1), the positioning means (6, 7) being designed in such a manner that, after the teat cup (2) has been positioned, said teat cup(2) can be given a fixed, predetermined orientation relative to the robot arm (1) with the aid of the bending means (9).

## Patentansprüche

1. Zitzenbecher mit einer innen angeordneten, flexiblen verformbaren Zitzenbecherauskleidung zum Melken einer Zitze eines zu melkenden Tieres, wobei der Zitzenbecher (2) derart ausgebildet ist, daß zumindest ein Teil seiner Länge flexibel und/oder verformbar ist, so daß der Zitzenbecher (2) und die Zitzenbecherauskleidung gemeinsam biegbar sind,
**dadurch gekennzeichnet, daß** der Zitzenbecher (2) mit einer Vorrichtung (9) versehen ist, um das eine Ende des Zitzenbechers in Richtung auf das andere Ende zu biegen.

2. Zitzenbecher nach Anspruch 1,
**dadurch gekennzeichnet, daß** der Zitzenbecher (2) derart ausgebildet ist, daß das eine Ende des Zitzenbechers in Richtung auf das andere Ende gebogen werden kann.

3. Zitzenbecher nach Anspruch 1,
**dadurch gekennzeichnet, daß** die Biegevorrichtung (9) ein Zugelement, wie z. B. eine Schnur, umfaßt, die seitlich an dem Zitzenbecher (2) an dessen oberem Teil befestigt ist und sich an dem Zitzenbecher (2) entlang nach unten erstreckt.

4. Zitzenbecher nach Anspruch 3,
**dadurch gekennzeichnet, daß** sich das Zugelement (9) teilweise durch ein Führungselement (10) erstreckt.

5. Zitzenbecher nach einem der Ansprüche 2 bis 4,
**dadurch gekennzeichnet, daß** das eine Ende des Zitzenbechers (2) in dem Maße in Richtung auf das andere Ende gebogen werden kann, daß eine Mittelachse des einen Endes einen Winkel von nicht mehr als 90° mit einer Mittelachse des anderen Endes bildet.

6. Zitzenbecher nach einem der Ansprüche 2 bis 5,
**dadurch gekennzeichnet, daß** der Zitzenbecher (2) mit einer Vorrichtung versehen ist, um den Zitzenbecher (2) in seine im wesentlichen gerade Form zurückzubiegen.

7. Zitzenbecher nach einem der Ansprüche 2 bis 6,
**dadurch gekennzeichnet, daß** der Zitzenbecher (2) derart ausgebildet ist, daß er geneigt ist, um im unbelasteten Zustand seine im wesentlichen gerade Form einzunehmen.

8. Zitzenbecher nach einem der Ansprüche 1 bis 7,
**dadurch gekennzeichnet, daß** der flexible und/oder verformbare Teil des Zitzenbechers (2) eine Feder (12) umfaßt.

9. Zitzenbecher nach Anspruch 8,
**dadurch gekennzeichnet, daß** die Feder (12) durch eine vorgespannte Druckfeder gebildet ist.

10. Zitzenbecher nach einem der Ansprüche 8 und 9,
**dadurch gekennzeichnet, daß** die Feder (12) vulkanisiert ist.

11. Zitzenbecher nach einem der Ansprüche 8 bis 10,
**dadurch gekennzeichnet, daß** die Feder (12) in einem vorgespannten Gehäuse angeordnet ist.

12. Zitzenbecher nach einem der Ansprüche 1 bis 7,
**dadurch gekennzeichnet, daß** der flexible und/oder verformbare Teil des Zitzenbechers (2) eine Anzahl von im wesentlichen ringförmigen Elementen (13) umfaßt, die gelenkig oder flexibel miteinander verbunden sind.

13. Melkroboter, der mindestens einen Roboterarm mit mindestens einem Zitzenbecher nach einem der Ansprüche 1 bis 12 aufweist,
**dadurch gekennzeichnet, daß** das obere Ende des Zitzenbechers (2) in eine Position gebogen werden kann, in der es horizontal oder nach unten gerichtet ist.

14. Melkroboter, der mindestens einen Roboterarm mit mindestens einem Zitzenbecher nach einem der Ansprüche 1 bis 12 aufweist,
**dadurch gekennzeichnet, daß** der Zitzenbecher (2) und/oder der Roboterarm (1) mit Vorrichtungen (6, 7) zum Positionieren des Zitzenbechers (2) an dem Roboterarm (1) versehen sind/ist, wobei die Positioniervorrichtungen (6, 7) derart ausgebildet sind, daß der Zitzenbecher (2) bei seiner Positionierung automatisch eine feste vorgegebene Ausrichtung relativ zu dem Roboterarm (1) erhält.

15. Melkroboter nach Anspruch 14,
**dadurch gekennzeichnet, daß** die Positioniervorrichtungen (6, 7) einen Vorsprung (6) und eine mit diesem zusammenwirkende Ausnehmung umfassen.

16. Melkroboter nach einem der Ansprüche 14 und 15,
**dadurch gekennzeichnet, daß** der Vorsprung (6) und die Ausnehmung die Form einer Eihälfte (im Längsschnitt) aufweisen.

17. Melkroboter, der mindestens einen Roboterarm mit mindestens einem Zitzenbecher nach Anspruch 1 oder einem der Ansprüche 3 bis 12 aufweist,
**dadurch gekennzeichnet, daß** der Zitzenbecher (2) und/oder der Roboterarm (1) mit Vorrichtungen (6, 7) zum Positionieren des Zitzenbechers (2) an dem Roboterarm (1) versehen sind/ist, wobei die Positioniervorrichtungen (6, 7) derart ausgebildet sind, daß dem Zitzenbecher (2) nach seiner Positionierung mit Hilfe der Biegevorrichtung (9) eine feste vorgegebene Ausrichtung relativ zu dem Roboterarm (1) verliehen werden kann.

## Revendications

1. Gobelet trayeur possédant un fourreau de gobelet trayeur déformable et flexible disposé à l'intérieur pour la traite d'un trayon d'un animal devant être trait, le gobelet trayeur (2) étant conçu de telle façon qu'au moins une partie de sa longueur est flexible et/ou déformable, de sorte que le gobelet trayeur (2) et le fourreau de gobelet trayeur puissent être courbés ensemble, **caractérisé en ce que** le gobelet trayeur (2) est fourni avec des moyens (9) permettant de courber une extrémité du gobelet trayeur en direction de l'autre extrémité.

2. Gobelet trayeur selon la revendication 1, **caractérisé en ce que** le gobelet trayeur (2) est conçu de telle façon qu'une extrémité du gobelet trayeur puisse être courbée vers l'autre extrémité.

3. Gobelet trayeur selon la revendication 1, **caractérisé en ce que** les moyens de courbure (9) comprennent un élément tirant, tel qu'une corde, lequel est attaché sur la paroi latérale du gobelet trayeur (2) à sa partie supérieure et descend le long du gobelet trayeur (2).

4. Gobelet trayeur selon la revendication 3, **caractérisé en ce que** l'élément tirant (9) traverse partiellement un élément guide (10).

5. Gobelet trayeur selon l'une quelconque des revendications 2 à 4, **caractérisé en ce qu'**une extrémité du gobelet trayeur (2) peut être courbée en direction de l'autre extrémité à un degré tel qu'un axe central d'une extrémité forme un angle ne dépassant pas 90° avec un axe central de l'autre extrémité.

6. Gobelet trayeur selon l'une quelconque des revendications 2 à 5, **caractérisé en ce que** le gobelet trayeur (2) est fourni avec des moyens pour recourber le gobelet trayeur (2) dans sa forme initiale sensiblement droite.

7. Gobelet trayeur selon l'une quelconque des revendications 2 à 6, **caractérisé en ce que** le gobelet trayeur (2) est conçu de telle façon qu'il puisse être incliné pour reprendre sa forme sensiblement droite lorsqu'il est vide.

8. Gobelet trayeur selon l'une quelconque des revendications 1 à 7, **caractérisé en ce que** la partie flexible et/ou déformable du gobelet trayeur (2) comprend un ressort (12).

9. Gobelet trayeur selon la revendication 8, **caractérisé en ce que** le ressort (12) est constitué d'un ressort de compression précontraint.

10. Gobelet trayeur selon l'une quelconque des revendications 8 et 9, **caractérisé en ce que** le ressort (12) est vulcanisé.

11. Gobelet trayeur selon l'une quelconque des revendications 8 à 10, **caractérisé en ce que** le ressort (12) est placé dans un boîtier précontraint.

12. Gobelet trayeur selon l'une quelconque des revendications 1 à 7, **caractérisé en ce que** la partie flexible et/ou déformable du gobelet trayeur (2) comprend un nombre d'éléments de forme sensiblement annulaire (13), lesquels sont raccordés les uns aux autres par un système pivotant ou flexible.

13. Robot trayeur ayant au moins un bras de robot fourni avec au moins un gobelet trayeur selon l'une quelconque des revendications 1 à 12, **caractérisé en ce que** l'extrémité supérieure du gobelet trayeur (2) peut être courbée dans une position selon laquelle elle sera orientée horizontalement ou vers le bas.

14. Robot trayeur ayant au moins un bras de robot équipé d'au moins un gobelet trayeur selon l'une quelconque des revendications 1 à 12, **caractérisé en ce que** le gobelet trayeur (2) et/ou le bras de robot (1) sont/est fourni(s) avec des moyens (6, 7) permettant de positionner le gobelet trayeur (2) sur le bras de robot (1), les moyens de positionnement (6, 7) étant conçus de telle façon que, une fois positionné, on donne automatiquement au gobelet trayeur (2) une orientation prédéterminée, fixe par rapport au bras de robot (1).

15. Robot trayeur selon la revendication 14, **caractérisé en ce que** les moyens de positionnement (6, 7) comprennent une saillie (6) et une cavité associée à celle-ci.

16. Robot trayeur selon l'une quelconque des revendications 14 et 15, **caractérisé en ce que** la saillie (6) et la cavité ont la forme d'une moitié d'oeuf (en coupe longitudinale).

17. Robot trayeur ayant au moins un bras de robot équipé d'au moins un gobelet trayeur selon la revendication 1 ou l'une quelconque des revendications 3 à 12, **caractérisé en ce que** le gobelet trayeur (2) et/ou le bras de robot (1) sont/est fourni(s) avec des moyens (6, 7) permettant de positionner le gobelet trayeur (2) sur le bras de robot (1), les moyens de positionnement (6, 7) étant conçus de telle façon qu'une fois le gobelet trayeur (2) placé, on donne audit gobelet trayeur (2) l'orientation prédéterminée, fixe par rapport au bras de robot (1) à l'aide des moyens de courbure (9).
